Europäisches Patentamt

(19) European Patent Office

Office européen des brevets

(11) Veröffentlichungsnummer: **0 083 692**
**B1**

(12) **EUROPÄISCHE PATENTSCHRIFT**

(45) Veröffentlichungstag der Patentschrift:
**29.01.86**

(21) Anmeldenummer: **82109458.8**

(22) Anmeldetag: **13.10.82**

(51) Int. Cl.⁴: **B 62 D 35/02**

(54) Verkleidungsteil für die Unterseite eines Kraftfahrzeuges, insbesondere Personenwagens.

(30) Priorität: **23.12.81 DE 3150952**

(43) Veröffentlichungstag der Anmeldung:
**20.07.83 Patentblatt 83/29**

(45) Bekanntmachung des Hinweises auf die Patenterteilung:
**29.01.86 Patentblatt 86/5**

(84) Benannte Vertragsstaaten:
**DE FR GB IT**

(56) Entgegenhaltungen:
**DE - B - 1 109 046**
**DE - U - 1 885 798**

**Die Akte enthält technische Angaben, die nach dem Eingang der Anmeldung eingereicht wurden und die nicht in dieser Patentschrift enthalten sind.**

(73) Patentinhaber: **Dr.Ing.h.c. F. Porsche Aktiengesellschaft, Porschestrasse 42, D-7000 Stuttgart 40 (DE)**

(72) Erfinder: **Singer, Norbert, Dipl.-Ing., Sudetenstrasse 29, D-7143 Vaihingen/Enz 2 (DE)**
Erfinder: **Flegl, Helmut, Dipl.-Ing., Heckenweg 40/3, D-7250 Leonberg (DE)**

## Beschreibung

Die Erfindung betrifft ein Verkleidungsteil für die Unterseite eines Kraftfahrzeuges, insbesondere Personenwagens, das benachbart der Fahrbahn verläuft und entlang seiner Längserstreckung zumindest bereichsweise eine aerodynamisch gestaltete Form aufweist.

Bei einem bekannten Verkleidungsteil (DE-B-1 109 046) der eingangs genannten Gattung sind im Bereich der Radachsen konvexe Wölbungen vorgesehen, durch die zwar Abtrieb und damit eine gute Strassenhaftung erzielt wird, jedoch kann durch diese Massnahme der Luftwiederstandsbeiwert eines Kraftfahrzeuges nicht verbessert werden.

Es ist deshalb Aufgabe der Erfindung, am Verkleidungsteil für die Unterseite eines Kraftfahrzeuges solche Vorkehrungen zu treffen, dass bei guter Strassenhaftung der Luftwiderstandsbeiwert verbessert wird.

Erfindungsgemäss wird diese Aufgabe durch die kennzeichnenden Merkmale des Anspruches 1 gelöst. Weitere, die Erfindung ausgestaltende Merkmale sind in den Unteransprüchen enthalten.

Die mit der Erfindung hauptsächlich erzielten Vorteile sind darin zu sehen, dass durch die Ausbildung der Formabschnitte und der Einschnürungen der Luftwiderstandsbeiwert verbessert wird und zwar unter Beibehaltung eines die Strassenhaftung günstig beeinflussenden Abtriebs. Der erste Formabschnitt bewirkt eine Vergrösserung des Luftraumes zwischen Verkleidungsteil und Fahrbahn. Auf diese Weise wird der den Luftwiderstand beeinträchtigende Einfluss an der Unterseite des Kraftfahrzeuges, hervorgerufen durch die örtliche Verengung der Räder, gegebenenfalls auch der Radhäuser, und Turbulenzen im Bereich der zuletzt genannten zumindest reduziert.

In der Zeichnung ist ein Ausführungsbeispiel der Erfindung dargestellt, das nachstehend näher erläutert wird.

Es zeigt:

Fig. 1 eine Teilansicht eines Vorderwagens eines Kraftfahrzeuges,

Fig. 2 eine Teilansicht der Fig. 1.

Das Kraftfahrzeug 1 umfasst einen Aufbau 2 mit einem oberen Verkleidungsteil 3 und einem unteren Verkleidungsteil 4, die in einen strömungsgünstig gestalteten (gewölbten) Bug 5 einlaufen. Mit 6 ist ein Rad bezeichnet, dessen Zentrum auf einer senkrecht verlaufenden Vorderachsebene A-A liegt.

Das Verkleidungsteil 4, das separat ausgebildet oder Bestandteil eines Bodens sein kann, verläuft benachbart einer Fahrbahn 8 und weist in einem sich zu beiden Seiten der Vorderachsebene A-A erstreckenden Bereich B einen ersten Formabschnitt 9 auf, der sich in Fahrzeugquerrichtung zumindest über einen Teilbereich des Bodens erstreckt. Der Formabschnitt 9 ist konkav, d.h. er vergrössert die Luftstromquerschnittsfläche zwischen Verkleidungsteil 4 und Fahrbahn 8.

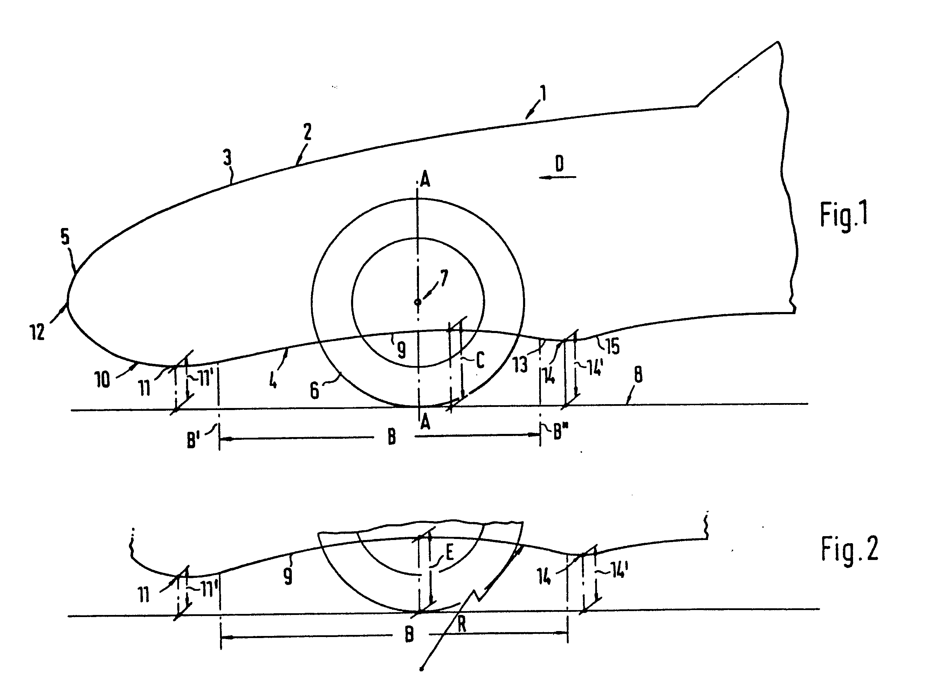

Gemäss Fig. 1 verläuft der Formabschnitt 9 auf einer Kurve, wobei die grösste Entfernung C des Formabschnittes 9 zur Fahrbahn 8 — in Fahrtrichtung D gesehen — hinter der Vorderachsebene A-A liegt.

In Fig. 2 verläuft der Formabschnitt 9 auf einem Kreis R; die grösste Entfernung F zur Fahrbahn 8 liegt auf der Vorderachsebene A-A.

An den ersten Formabschnitt 9 ist am vorderen Ende B' des Bereiches B ein zweiter Formabschnitt 10 angeschlossen, der einen konvexen Formverlauf aufweist und ein Teil des gewölbten Buges 5 bildet. Der Bug 5 kann gegebenenfalls mit einem integrierten Stossfänger versehen sein.

Ausserdem weist der Formabschnitt 10 vor dem vorderen Ende B' des Bereiches B eine relativ zur Fahrbahn wirkende, den Abtrieb unterstützende Einschnürung 11 auf; in Fahrzeugquerrichtung erstreckt sie sich ebenfalls zumindest über einen Teilbereich des Bodens. Von dieser Einschnürung 11 aus verläuft der Formabschnitt 10 in Richtung eines höherliegenden Bugendbereiches 12.

Am hinteren Ende B'' des Bereiches B des ersten Formabschnittes 9 ist ein dritter Formabschnitt 13 angeschlossen, der entgegen der Fahrtrichtung D so verläuft, dass er zunächst eine relativ zur Fahrbahn 8 bewirkende Einschnürung 14 bildet und danach einen konkaven Formverlauf aufweist, dergestalt, dass zwischen Verkleidungsteil 4 und Fahrbahn 8 eine die Luftstromquerschnittsfläche vergrössernde Mulde 15 entsteht.

Im Ausführungsbeispiel ist aus Funktionsgründen der Abstand 11' der Einschnürung 11 zur Fahrbahn 8 kleiner als der entsprechende Abstand 14' der Einschnürung 14.

## Patentansprüche

1. Verkleidungsteil für die Unterseite eines Kraftfahrzeuges, insbesondere Personenwagens, das benachbart der Fahrbahn verläuft und entlang seiner Längserstreckung zumindest bereichsweise eine aerodynamisch gestaltete Form aufweist, dadurch gekennzeichnet, dass das Verkleidungsteil (4) in dem sich zu beiden Seiten der senkrechten Vorderachsebene (A-A) erstreckenden Bereich (B) mit einem konkaven, die Luftstromquerschnittsfläche zwischen Verkleidungsteil (14) und Fahrbahn (8) im Randbereich vergrösserden ersten Formabschnitt (9) versehen ist.

2. Verkleidungsteil nach Anspruch 1, dadurch gekennzeichnet, dass der Formabschnitt (9) auf einer Kurve verläuft.

3. Verkleidungsteil nach Anspruch 1, dadurch gekennzeichnet, dass der erste Formabschnitt (9) auf einem Kreis verläuft.

4. Verkleidungsteil nach Anspruch 1, dadurch gekennzeichnet, dass an den ersten Formabschnitt (9) am vorderen Ende (B') des Vorderachsebenenbereiches (B) ein im wesentlichen nach aussen gerichteter zweiter Formabschnitt (10) angeschlossen ist, der Teil eines gewölbten Buges bildet.

5. Verkleidungsteil nach Anspruch 4, dadurch gekennzeichnet, dass der zweite Formabschnitt (10) vor dem vorderen Ende (B') des Vorderachsebenenbereiches (B) eine zwischen Verkleidungsteil (4) und Fahrbahn (8) wirkende erste Einschnürung (11) aufweist.

6. Verkleidungsteil nach Anspruch 4, dadurch gekennzeichnet, dass der zweite Formabschnitt (10) auf einer Kurve verläuft, die sich von der ersten Einschnürung (11) aus in Richtung eines höherliegenden Bugendbereiches (12) erstreckt.

7. Verkleidungsteil nach Anspruch 1, dadurch gekennzeichnet, dass an den ersten Formabschnitt (9) am hinteren Ende (B'') des Vorderachsebenenbereiches (B) ein dritter Formabschnitt (13) angeschlossen ist, der entgegen der Fahrtrichtung (D) so verläuft, dass zunächst zwischen Verkleidungsteil (4) und der Fahrbahn (8) eine zweite Einschnürung (14) und danach eine die Luftstromquerschnittsfläche vergrössernde Mulde (15) entsteht.

8. Verkleidungsteil nach Anspruch 7, dadurch gekennzeichnet, dass der Abstand (11') der ersten Einschnürung (11) zur Fahrbahn (8) kleiner ist als der Abstand (14'') der zweiten Einschnürung (14).

**Revendications**

1. Élément de revêtement pour le dessous d'un véhicule automobile, notamment d'une voiture particulière, s'étendant près de la chaussée et présentant une forme aérodynamique sur au moins certaines zones de son étendue longitudinale, caractérisé en ce que ledit élément de revêtement (4) comporte, dans la zone (B) s'étendant des deux côtés du plan vertical (A-A) passant par l'essieu avant, une première section profilée (9) concave, augmentant la section droite d'écoulement de l'air entre l'élément de revêtement (14) et la chaussée (8) dans la zone des roues.

2. Élément de revêtement selon la revendication 1, caractérisé en ce que la section profilée (9) suit une courbe.

3. Élément de revêtement selon la revendication 1, caractérisé en ce que la première section profilée (9) suit un cercle.

4. Élément de revêtement selon la revendication 1, caractérisé en ce qu'il se raccorde à l'extrémité antérieure (B') de la zone (B) du plan de l'essieu avant, une seconde section profilée (B) dirigée essentiellement vers l'extérieur, faisant partie d'un avant bombé.

5. Élément de revêtement selon la revendication 4, caractérisé en ce que la seconde section profilée (10) comporte, devant l'extrémité antérieure (B') de la zone (B) du plan de l'essieu avant, un premier rétrécissement (11) opérant entre l'élément de revêtement (4) et la chaussée (8).

6. Élément de revêtement selon la revendication 4, caractérisé en ce que la seconde section profilée (10) suit une courbe se dirigeant, à partir du premier rétrécissement (11), en direction d'une zone terminale (12) du nez située plus haut.

7. Élément de revêtement selon la revendication 1, caractérisé en ce qu'il se raccorde à la première section profilée (9), à l'extrémité postérieure (B'') de la zone de l'esseau avant (B), une troisième section profilée (13) ayant, dans le sens opposé au sens de déplacement (D), une allure telle qu'elle forme d'abord, entre l'élément de revêtement (4) et la chaussée (8), un second rétrécissement (14), puis un creux (15) augmentant la section droite d'écoulement de l'air.

8. Élément de revêtement selon la revendication 7, caractérisé en ce que la distance (11) du premier rétrécissement (11) à la chaussée (8) est inférieure à la distance (14'') du second rétrécissement (14).

**Claims**

1. Panel for the underside of a motor vehicle, more particularly a passenger vehicle, which extends adjacent the roadway and has along its longitudinal extension at least in certain regions an aerodynamically designed shape, characterised in that the panel (4), in the region (B) which extends to both sides of the perpendicular front axle plane (A-A), is provided with a concave first shaped section (9) which increases the air flow area of cross section between the panel (14) and the roadway (8) in the wheel region.

2. Panel according to claim 1, characterised in that the shaped section (9) extends on a curve.

3. Panel according to claim 1, characterised in that the first shaped section (9) extends on a circle.

4. Panel according to claim 1, characterised in that a second shaped section (10), which is guided substantially outwards, is connected to the first shaped section (9) on the front end (B') of the front axle plane region (B) and forms part of an arcuate nose.

5. Panel according to claim 4, characterised in that the second shaped section (10) in front of the front end (B') of the front axle plane region (B) has a first narrowed portion (11) between the panel (4) and roadway (8).

6. Panel according to claim 4, characterised in that the second shaped section (10) projects on a curve, which extends from the first narrowed portion (11) outwards in the direction of a nose end region (12) which is disposed higher up.

7. Panel according to claim 1, characterised in that a third shaped section (13) is connected to the first shaped section (9) on the rear end (B'') of the front axle plane region (B) and extends away from the direction of travel (D) in such a way that between the panel (4) and the roadway (8) there is a second narrowed portion (14) and then a recess (15) which increases the air flow area of section.

8. Panel according to claim 7, characterised in that the distance (11') between the first narrowed portion (11) to the roadway is smaller than the distance (14'') of the second narrowed portion.

Fig.1

Fig.2

0 083 692